# EUROPEAN PATENT APPLICATION

(11) **EP 4 357 127 A1**
(43) Date of publication of application: **24.04.2024**
(21) Application number: 22202518.1
(22) Date of filing: 19.10.2022
(51) Int. Cl.: B32B 17/10

(54) **IMPROVED HEAT MANAGEMENT FOR LAMINATED GLASS COMPRISING OBSCURATION AREAS**

(71) Applicant: Kuraray Europe GmbH, 65795 Hattersheim am Main (DE)
(72) Inventor: Keller, Uwe, 77210 Avon (FR)

(57) **Abstract**

The present invention relates to interlayer films for laminated glazing, in particular windscreens, which have a printed, non-transparent region with an improved heat management.

## Description

The present invention relates to interlayer films for laminated glazing, in particular windscreens, which have a printed, non-transparent region with an improved heat management.

Recently, the trend towards integration of a multitude of safety, self-driving, comfort and entertainment functions into passenger vehicles goes along with ever increasing glass surfaces on the car body for a more stylish appearance and increase of passenger comfort.

For several functionalities, electronic components need to be placed directly underneath the glazing. For a better appearance and for protection of the electronic components against UV irradiation, the related devices are generally hidden from view by a black obscuration.

Examples of such electronic components are image sensors in optical or NIR cameras and radars used for Advanced Driver Assistance Systems (ADAS), antennae for communication, transistors for switchable films and related electronic control units.

Especially for glazing panels mounted in roof position or the top portion of a windshield, temperatures close to 100 °C can build up when exposed to direct sunlight in areas where black obscuration is present. Such heat load is often aggravated by constraints dictated by the design and overall construction of the vehicle. For example, ADAS components at the top of a windshield are often grouped together in a kind of closed housing behind the windshield to protect them from dust or manipulation. However, it is difficult to provide passive or active cooling due to cost and constructional constraints. Since the function of electronic systems like microchips or image sensors is negatively influenced by high temperatures and active cooling is typically not available, the safe operation of the car is in conflict with the aesthetically pleasant integration of these systems.

This problem is addressed by the present invention:
Obscuration for non-transparent areas is achieved by combining heat-reflective layers with obscuration layers which are transparent for heat radiation. In other words, the IR irradiation mainly causing the temperature build-up can pass through the obscuration layer but is reflected by the heat-reflective layer, passing through the heat-transparent obscuration layer again and finally leaving the vehicle glass. Thus, the obscuration areas according to the invention absorb substantially less heat as compared to the known heat-absorbing obscuration layers.

Accordingly, the present invention concerns a laminated glass for use as a vehicle glazing comprising two sheets of glass, combined by an interlayer film with a film A comprising a polyvinyl acetal and, prior to lamination, less than 22 % by weight of a plasticiser, and a film B comprising a polyvinyl acetal and, prior to lamination, at least 22 % by weight of a plasticiser, wherein
a. film A is provided with a heat-transparent obscuration D wherein the heat-transparent obscuration D has a transmission in the visible light spectrum from 380 nm to 780 nm of less than 20% and a transmission for infrared radiation from 850 nm to 1200 nm of more than 50%; and
b. film A is provided with a heat-reflective layer C with a reflectance for infrared radiation from 850 nm to 1200 nm of more than 20%.

Thus, the amounts specified for content of plasticizer and other ingredients in the separate films shall refer to the state "prior to lamination", i.e. refers to the state of the films A and B prior to having any contact to each other. For example, the term refers to the composition of each film separately formed and separately wound to individual rolls.

Preferably, the obscuration area D has a transmission in the visible spectrum from 380 nm to 780 nm of less than 20%, more preferably 10% and most preferably less than 5%. Also preferably, the obscuration area has an L* value in the L*,a*,b* system of less than 20, more preferably less than 15, even more preferably less than 10. Preferably, the obscuration area D appears grey or black. Alternatively, they can also be in any other colour. The transmission and the L* values are measured using the method described in the examples on laminates comprising two pliers of glass, a film A and a film B.

Transmission of visible light was measured on a Perkin Elmer Lambda 950 UV/Vis/NIR spectrophotometer after lamination of film A with the obscuration area with a clear PVB as film B between two clear soda lime glasses 2.1 mm Planiclear^{®} from Saint Gobain. The measurement was conducted according to ISO 9050 (2003) with calculation of light transmission over the range 380 - 780 nm. For simplicity, the transmission in the range of 850 - 1200 nm was computed as a linear average of the available transmission / wavelength data pairs that fell within the range. A measurement interval of 10 nm was used in this range.

The reflectance for infrared radiation is measured according to ISO 9050. From the reflectance curve, the linear average in a range of 850 - 1200 nm is calculated. The measurement is performed on a spectrometer of the UV/VIS/NIR type, e.g. Perkin Elmer Lambda 950. To this end, film A carrying the heat reflective layer C but not the heat transparent obscuration D, is combined with TROSIFOL^{®} V200 0.76 (a clear PVB in 0.76 mm thickness) and laminated between two plies of 2.1 mm Planiclear^{®} glass (a clear soda lime glass) to a sandwich with the following construction: glass / film A - layer C / PVB 0.76 / glass. The reflectance is measured from the glass / film A side.

Similarly, reflectance is measured with the heat transparent obscuration D present on film A with the following configuration: glass / film A - obscuration D - layer C / PVB 0.76 / glass and measurement from the glass / film A side.

The glass sheet can be made from any material useful for the production of windshield, sun roof or back light including glass and polycarbonate.

Preferably, the obscuration in the heat-transparent obscuration layer is provided by printing or coating a layer of a pigment or dye on at least one surface of film A and/or onto the heat-reflective layer C. Also preferably, the obscuration is provided by adding a pigment or dye to the body of film A during the manufacture process of film A.

The printing inks can be formulated and applied via techniques that are commonly known in the printing industry such as offset printing, rotogravure printing, flexography, and screen-printing, ink-jet printing, followed usually by a drying step.

The obscuration area can be completely opaque and/or in part interrupted and/or have a transition area from a completely opaque edge into the non-printed transparent area. Interrupted printing may be achieved in form of dotted patterns. The pigmented band may also continuously fade-in from transparent to opaque black or grey (without recurring to easily visible dots).

Black or dark green or dark violet or dark blue tinting pigments such as perylene pigments are particularly suitable. Perylene pigments are known with many substitution patterns, e.g. from DE 102004007382 A1, and are used as paint additive and dye for polymers. Well-known representative of this group of substances are available from BASF under the name of Paliogen^{®} Black L 0086, Lumogen^{®} Black K 0087, Lumogen^{®} Black K 0088, Paliogen Black S 0084, Irgaphor Black S 0100CF. Epolight 7276 A/B is a representative of another class of NIR transparent black / dark violet dyes and available from Epolin USA. Black IR transparent azo pigments, e.g. such as described in US6623556B2 are similarly suitable as are dark violet coloured dioxazine dies. Other preferred dark tinting dyes respective pigments are available by Clariant under the names Polysynthren Black H (Solven Black 27) or Solvaperm Black PCR. Most preferably, the pigment or dye comprises a perylene pigment, preferably derived of Perylene-3,4,9,10-tetracarboxylic diimide or perylene tetracarboxylic acid dianhydride or their higher homologues.

Examples of organic dyes that can be used for colour adjustment or to produce non-black shades are, for example, dyes from the Macrolex^{®} series from Bayer, which includes anthraquinone derivatives, or dyes from the Waxoline^{®} series from Zeneca Colours, which includes quinoline derivatives. Suitable organic pigments are e.g. quinacridones or phthalocyanines from various manufacturers. As an example of an inorganic pigment, besides the common metal oxide derivatives, carbon black can be mentioned if it is used in such small quantities that a sufficiently high transmission in the NIR range is maintained. Other suitable pigments or dyes are, for example, quinophthalones, pyrazolones, anthraquinones, perinones, monoazo dyes, phthalocyanines, perylenes, azo pigments, cromophthales, thioindigo pigments, dioxazines, diketopyrrolopyrroles, benzimidazolones, isoindolines, indanthrones, metal oxides, sulfides andchromates. Since the colorants described are often not used alone but as one of several components to achieve a desired color impression, the quantity used may be very small if the colorant is only a minor component.

Particularly suitable are the dyes of the Macrolex series, e.g. Macrolex blue RR, Macrolex violet 3R from Bayer AG or Waxoline Yellow 3GP IFW from Zeneca.

Typical application concentrations of the perylene pigments or all the colouring compounds used are in the range from 0.001 g/m2 to 10 g/m2, preferably 0.001 to 5 g/m2, particularly preferably 0.001 to 1.5 g/m2, based on the printed or coated surface.

Also preferably, the obscuration area D has at least one area with a transmission in the visible spectrum from 380 nm to 780 nm of more than 70% embedded therein. Thus, this area is at least partially translucent to visible lights which makes it possible to operate camera systems, LIDAR or other optical sensors behind this area.

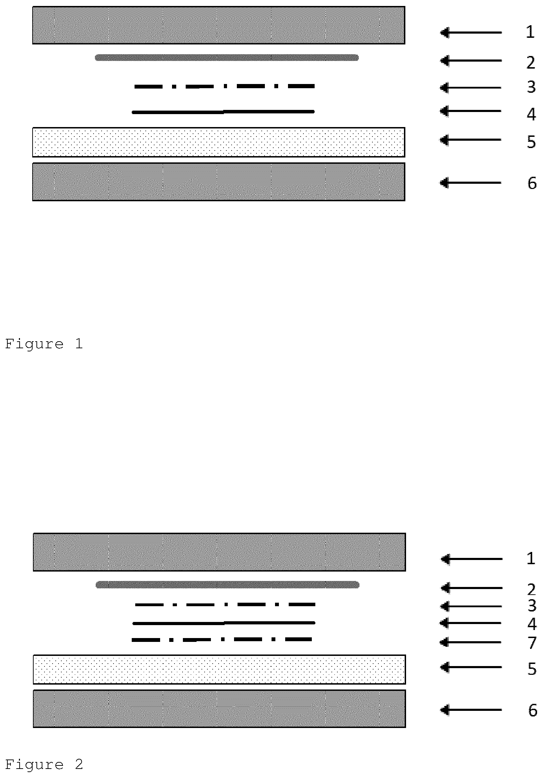

Fig. 1 shows a schematic view of the laminate according to the invention.
Fig. 2 shows a schematic view of a preferred laminate according to the invention.

Reference numerals:
1: First sheet of glass
2: Film A
3: Heat-transparent obscuration D
4: Heat-reflective layer C
5: Film B
6: Second sheet of glass
7: Obscuration layer E

The dry-film thickness of the print- or coating layer is between 1-50 µm depending on printing technique and required opacity. Usually the dry-film thickness is between 2-20 µm. High enough total dry-film thicknesses can be achieved by overlaying ink-layers through repetition of sequential printing / coating steps.

Preferably, the printed-on or coated-on pigmented layer will be oriented facing film B rather than the glass surface to avoid differences of adhesion between any transparent part and the printed-on area of film A on the glass surface due to components of the pigmented layer.

Film A in the starting state prior to lamination may have a thickness ratio to film B of less than 0.2.

The thickness of a film A in the starting state prior to lamination is 5 - 150 µm, preferably 10 - 100 µm, preferably 15 - 60 µm and most preferably 20 - 40 µm. This range of thickness does not include additional printing layer / coating layer on the films. In the laminated glass, the thickness of the film can increase by transfer of plasticiser from film B.

Film A is produced separately from film B (for example by extrusion or solvent casting) and has either no plasticiser at all or sufficiently small proportion of plasticiser so that subsequent functionalization and processing is not adversely influenced.

Film A might contain alkali metal ions; potassium or sodium or lithium are preferred. Preferred ranges of concentration of the alkali metal ions are 7 - 210, preferably 14 - 140 and more preferably 21 - 140 ppm in the case of lithium, 23 - 690, preferably 46 - 460 and more preferably 69 - 460 ppm in the case of sodium and 39 - 1170, preferably 78 - 780 ppm and more preferably 117 - 780 in the case of potassium. It is furthermore preferred to add the alkali metal ions in form of salts of carboxylic acids having 1 to 10 carbon atoms. Especially preferred is potassium acetate as adhesion control agent.

The total amount of alkali metal salts may be as low as 0.005 % by weight based on the weight of film A. Preferred ranges of alkali metal salt are 0.01 % - 0.1 %; 0.02 - 0.08 %; 0.03 - 0.06 %, each weight % based on the weight of film A.

Film A used in the laminates of the invention may additionally comprise alkaline earth ions, but since their effect on adhesion is limited, only small amounts as compared to the alkali ion should be used. In a first embodiment of the invention film A comprises 0 to 20 ppm alkaline earth ions, preferable 0 to 5 ppm.

Film B may be any plasticized PVB-film known in the art.

The films A and B may contain, in the starting state prior to lamination and/or in a stack prepared for lamination between glass sheets, a single plasticiser as well as mixtures of plasticisers both of different and identical composition. The term "different composition" refers to both the type of plasticiser and proportion thereof in the mixture. Film A and film B after lamination, i.e. in the finished laminated glass, preferably have the same plasticisers WA and WB. In a preferred variant, film A in its starting state, however, does not contain any plasticiser and after lamination contains plasticiser WB in equilibrium amount.

Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

Films A used in accordance with the invention may contain, in the starting state prior to lamination, less than 22 % by weight (such as 21.9 % by weight), less than 18 % by weight less than 16 % by weight, less than 12 % by weight, less than 8 % by weight, less than 4 % by weight, less than 2 % by weight, less than 1 % by weight or even no plasticiser (0.0 % by weight). In a preferred embodiment of the invention, films A with a low plasticiser content preferably contain 0.0 - 8 % by weight of plasticiser, most preferred 0 - 4 % by weight.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The thickness of film B in the starting state is 450 - 2500 µm, preferably 600 - 1000 µm, preferably 700 - 900 µm. A plurality of films B may be used in the invention, either being stacked on each other or separated by films A. In such case, above thickness ranges apply to the sum of the plurality of films B.

If films B are stretched prior to production of the sandwich and/or additionally are adapted to the shape of a screen (for example a windscreen) in a curved manner, the specified thicknesses at the moment of lamination may reduce once more by up to 20 %.

The films A and B used in accordance with the invention contain polyvinyl acetals, which are produced by acetalisation of polyvinyl alcohol or ethylene vinyl alcohol copolymer.

The films can contain polyvinyl acetals, each having a different polyvinyl alcohol content, degree of acetalisation, residual acetate content, ethylene proportion, molecular weight and/or different chain lengths of the aldehyde of the acetal groups.

In particular, the aldehydes used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The polyvinyl acetate content of the polyvinyl acetals in the films A or B can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in film A may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

Independent of film A, the polyvinyl alcohol content of the polyvinyl acetals PB used in film B may be between 14 - 26 % by weight, 16 - 24 % by weight, 17 - 23 % by weight and preferably between 18 and 21 % by weight.

The vinyl alcohol content and vinyl acetate content of polyvinyl acetal were determined in accordance with DIN ISO 3681 (acetate content) and DIN ISO 53240 (PVA content).

In a preferred embodiment of the invention, film A comprises a polyvinyl acetal PA with a proportion of vinyl alcohol groups from 6 to 26 % by weight and the film B comprises a polyvinyl acetal B with a proportion of vinyl alcohol groups from 14 to 26 % by weight.

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.

- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

In addition, films A and B may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

In particular, film B may comprise 0.001 to 0.1 % by weight of alkaline metal salts and/or alkaline earth salts of carboxylic acids as adhesion control agent. It is preferred that film B contains magnesium ions in an amount of at least 10 ppm, preferably 20 ppm and most preferably 30 ppm.

Preferably, the heat-reflective layer C is provided by
a. coating or printing an IR reflecting pigment composition onto at least one surface of film A and/or onto the heat-transparent obscuration D; or
b. a metal foil or metal coating applied to at least one surface of film A and/or onto the heat-transparent obscuration D.

More preferably, the white pigments include titanium dioxide both in rutil- and anastas modifications, barium sulfate, lead carbonate, or mixtures thereof. The preferred white pigment is titanium dioxide in the rutil modification. More preferably, the metal foil or metal coating comprises an aluminium foil, an aluminium layer, a silver foil, a silver layer, a gold foil, a gold layer, a copper foil, a copper layer, a chromium foil, a chromium layer or a combination thereof.

Also preferably, the heat-reflective layer is a white coat or a white print.

For improved optical appearance, another obscuration layer is placed on the other side of the heat-reflective layer, i.e. the side facing the inside of the car. This second obscuration layer E is generally black or grey and usually in the same colour as the first obscuration layer. Thus, the heat-reflective layer is hidden from view also from the inside of the car or from the perspective of a camera or sensor. As this second obscuration layer is behind the heat-reflective layer, it can be either heat-absorbing or heat-reflective. Preferably, the second obscuration layer E is at least the same size as the heat-reflective layer C in order to completely cover it from view from the inside of the vehicle.

Accordingly, another embodiment concerns a laminated glass comprising, in that order,
a. a first sheet of glass intended to face to outside of a vehicle,
b. a film A,
c. a heat-transparent obscuration D,
d. a heat-reflective layer C,
e. an obscuration layer E,
f. film B, and
g. a second sheet of glass intended to face the inside of the vehicle.

Preferably, the obscuration layer E has a transmission in the visible light spectrum from 380 nm to 780 nm of less than 20% and a transmission for infrared radiation from 850 nm to 1200 nm of less than 50%.

Also preferably, the obscuration in the obscuration layer E is provided by printing or coating a layer of a pigment or dye on the surface of the heat-reflective layer C, more preferably the pigment or dye comprises carbon black.

The present invention also relates to a method for producing the described glass laminates, in which the film A with the heat-reflective and obscuration layer(s) is positioned on a glass sheet, then covered by at least one film B, and a second glass sheet is then applied.

Alternatively, it is possible for film B to be positioned on a glass sheet, then to be covered by the film A with the heat-reflective and obscuration layer(s), and for a second glass sheet to be applied.

It is possible in accordance with the invention to first melt the film A onto a glass sheet over the entire area or locally by increased temperature and to then cover this with the film B. Alternatively, films A and B can be positioned jointly between two glass sheets and melted at increased temperature.

The lamination step for producing a laminated glass is preferably carried out such that films A and B are positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

Vacuum laminators may also be used. These consist of a chamber that can be heated and evacuated, in which laminated glazings can be laminated within 30 - 60 minutes. Reduced pressures from 0.01 to 300 mbar and temperatures from 100 to 200 °C, in particular 130 - 160 °C, have proven their worth in practice.

It is also possible for the films B to have a wedge-shaped thickness profile. The laminated glass laminate according to the invention obtains a wedge-shaped thickness profile even with plane-parallel thickness profile of the film A and can be used in motor vehicle windscreens for HUD displays.

Furthermore, film B may comprise at least two layers wherein the amount of plasticizer WB in the layers differs by least 2 % by weight. For sound-damping purposes, film B comprises 3 layers of which the core layer is softer due to higher plasticizer content.

The laminated glass according to invention may be used for windscreens, roof lights, back-lights and side glazing for cars, busses, trucks, ships or airplanes.

## Claims

1. A laminated glass for use as a vehicle glazing comprising two sheets of glass, combined by an interlayer film with a film A comprising a polyvinyl acetal and, prior to lamination, less than 22 % by weight of a plasticiser, and a film B comprising a polyvinyl acetal and, prior to lamination, at least 22 % by weight of a plasticiser, wherein
a. film A is provided with a heat-transparent obscuration D wherein the heat-transparent obscuration D has a transmission in the visible light spectrum from 380 nm to 780 nm of less than 20% and a transmission for infrared radiation from 850 nm to 1200 nm of more than 50%; and
b. film A is provided with a heat-reflective layer C with a reflectance for infrared radiation from 850 nm to 1200 nm of more than 20%.

2. The laminated glass according to claim 1 wherein the obscuration in the heat-transparent obscuration D is provided by printing or coating a layer of a pigment or dye on at least one surface of film A and/or onto the heat-reflective layer C.

3. The laminated glass according to claim 2 wherein the pigment or dye comprises a perylene compound.

4. The laminated glass according to claim 1 or 2 wherein the heat-reflective layer C is provided by
a. coating or printing an IR reflecting pigment or dye composition onto at least one surface of film A and/or onto the heat-transparent obscuration D; or
b. a metal foil or metal coating applied to at least one surface of film A and/or onto the heat-transparent obscuration D.

5. The laminated glass according to claim 4 wherein the heat-reflective layer C is provided by a metal foil or metal coating and the metal foil or metal coating comprises an aluminium foil, an aluminium layer, a silver foil, a silver layer, a gold foil, a gold layer, or a combination thereof.

6. The laminated glass according to claim 4 wherein the heat-reflective layer is a white coat or a white print.

7. The laminated glass according to claim 6 wherein the white coat or white print comprises titanium dioxide in rutil- or anastas modification, barium sulfate, lead carbonate, or a mixture thereof.

8. The laminated glass according to any one of the claims above comprising, in that order,
a. a first sheet of glass intended to face to outside of a vehicle,
b. film A,
c. a heat-transparent obscuration D,
d. a heat-reflective layer C,
e. an obscuration layer E,
f. film B, and
g. a second sheet of glass intended to face the inside of the vehicle.

9. The laminated glass according to any one of the claims above wherein the obscuration layer E has a transmission in the visible light spectrum from 380 nm to 780 nm of less than 20% and a transmission for infrared radiation from 850 nm to 1200 nm of less than 50%.

10. The laminated glass according to claim 9 wherein the obscuration in the obscuration layer E is provided by printing or coating a layer of a pigment or dye on the surface of the heat-reflective layer C.

11. The laminated glass according to claim 10 wherein the pigment or dye comprises carbon black.

12. The laminated glass according to any one of the claims above wherein film A is provided with at least one camera area (2) wherein the at least one camera area (2) has a transmission in the visible light spectrum from 380 nm to 780 nm of more than 70%.

13. The laminated glass according to any one of the claims above wherein film A has a thickness between 10 and 100 µm.

14. The laminated glass according to any one of the claims above wherein an optical detection device is positioned at or on one the surface of one of the glass sheets in at least one of the camera areas (2).
